# EUROPÄISCHE PATENTSCHRIFT

(11) **EP 2 440 360 B1**
(45) Veröffentlichungstag und Bekanntmachung des Hinweises auf die Patenterteilung: **27.03.2013**
(21) Anmeldenummer: 10723594.7
(22) Anmeldetag: 09.06.2010
(51) Int. Cl.: B23K 9/02, B23K 9/028, B23K 9/167, B23K 9/173

(54) **SCHWEISSVERFAHREN FÜR WELLEN BEI VERTIKALER ROTATIONSACHSE**
METHOD FOR WELDING SHAFTS ON A VERTICAL ROTATIONAL AXIS
PROCÉDÉ DE SOUDAGE POUR ARBRES AVEC AXE DE ROTATION VERTICAL

(30) Priorität: 10.06.2009 DE 102009024581
(43) Veröffentlichungstag der Anmeldung: 18.04.2012
(73) Patentinhaber: Siemens Aktiengesellschaft, 80333 München (DE)
(72) Erfinder: GUNZELMANN, Karl-Heinz, 90491 Nürnberg (DE)
(86) Internationale Anmeldenummer: PCT/EP2010/058088
(87) Internationale Veröffentlichungsnummer: WO 2010/142726

(56) Entgegenhaltungen:
- EP-A1- 0 665 079
- US-A- 4 213 025
- US-B1- 6 499 946

## Beschreibung

Die vorliegende Erfindung betrifft ein Verfahren gemäß dem Oberbegriff des Hauptanspruchs,

Beim Verbindungsschweißen von Rotorwellen im Turbinen- und Generatorbau wird die so genannte Lichtbogen-Engspalt-Schweißtechnologie verwendet, um geschmiedete Wellenteilstücke zu einem Gesamtrotor zusammenzusetzen.

Sind mehr als zwei Verbindungen pro Rotor vorgesehen, werden herkömmlicher Weise die Rotorteilstücke in einer vertikalen Achsanordnung aufeinander gestapelt und in zwei Schritten miteinander verschweißt. Hierbei erfolgt das Schweißen der ersten Lagen, der so genannten Wurzelschweißung, nach dem so genannten Wolfram-Inertgas-(WIG)Engspaltverfahren. Nach dem Wurzelschweißen aller Verbindungen wird der Rotor von der vertikalen in die horizontale Achslage gekippt und der restliche Nahtquerschnitt in dieser Position nach dem so genannten Unterpulver-(UP-)Engspaltverfahren verschweißt.

Der notwendige Verbindungsquerschnitt, das heißt die Lagendicke der Wurzelschweißung, ergibt sich aus der Forderung, dass der teilgeschweißte Rotor ausreichende mechanische Festigkeit für den Kippvorgang hat. Übliche WIG-Lagendicken liegen in Abhängigkeit von den Teilrotor-Massenverhältnissen zwischen circa 20 mm und 30 mm. Das Kippen ist erforderlich, um mit dem hochleistungsfähigen UP-Verfahren den verbleibenden Nahtquerschnitt schneller und wirtschaftlicher verschweißen zu können. Da sich das UP-Verfahren in horizontaler Position der Rotorachse nicht effektiv anwenden lässt, ist das Kippen des wurzelgeschweißten Rotors erforderlich. Des Weiteren ist bei bestimmten Rotor-Werkstoffen eine zusätzliche Wärmeführung erforderlich, damit Risse durch das Kippen vermieden werden. Die US 4,213,025 offenbart eine Vorrichtung zur Verbindung von metallischen Teilen und derartig erzeugte metallische Teile mittels Lichtbogenfusionsschweißens unter Erzeugung einer Schweißnaht mit kleinem Volumen.

Die EP 0 665 079 A1 offenbart ein Verfahren zum Verbinden von Metallteilen mittels Lichtbogen-Schmelzschweißen durch eine volumenarme Schweißnaht, bei welchem die durch einen Engspalt gebildeten Werkstückflanken durch abwechselnd sich an die eine und an die andere Flanke anlegende Schweißraupen nach dem unter Pulverschweißverfahren verbunden werden.

Die US 6,499,946 B1 offenbart einen Dampfturbinenrotor mit einer Kombination von zumindest einem Hochdruckrotor, einem Zwischendruckrotor und einem Niederdruckrotor, die alle jeweils von einem Metallmaterial mit verschiedener chemischer Zusammensetzung ausgebildet sind und mittels Schweißeinrichtungen zusammengeschweißt werden.

Es ist Aufgabe der vorliegenden Erfindung beim Lichtbogen-Engspalt-Schweißen von Wellenteilstücken zu einer Welle, insbesondere einer Rotorwelle für eine Turbine und/oder einen Generator, ein herkömmliches Kippen einer Rotationsachse der Welle von einer Vertikalen in eine Horizontale und ein damit verbundenes erneute Einrichten der Welle zu vermeiden. Es sollen eine Fertigungszeit verringert und Schweißzusatzmaterial eingespart werden.

Die Aufgabe wird durch ein Verfahren gemäß dem Hauptanspruch gelöst.

Gemäß einem ersten Aspekt wird ein Verfahren zum Verbindungsschweißen einer Rotorwelle, insbesondere für eine Turbine und/oder einen Generator, mit dem folgenden Schritten bereitgestellt: Erzeugen von um eine Rotationsachse symmetrischen, koaxial entlang der Rotationsachse mindestens einen Hohlzylinder aufweisenden Wellenteilstücken; Positionieren jeweils zweier Wellenteilstücke entlang der vertikalen Rotationsachse koaxial aufeinander, wobei jeweils zwei Hohlzylinder mit deren Kreisringflächen aneinander angrenzen; Erzeugen einer ersten, radial inneren rohrförmigen Ringnaht zum Schweißverbinden der beiden Hohlzylinder in einem radial inneren Bereich der dazugehörigen Kreisringflächen mittels Wolfram-Inertgas-Lichtbogen-Engspalt-Schweißen. Die Erfindung zeichnet sich durch Erzeugen einer weiteren, radial äußeren rohrförmigen Ringnaht zum weiteren Schweißverbinden der Hohlzylinder in einem radial äußeren Bereich der dazugehörigen Kreisringflächen mittels eines Metall-Schutzgas-Lichtbogen-Engspalt-Schweißen, wobei die Rotationsachse vertikal ausgerichtet verbleibt.

Zusätzlich kann ein Wellenteilstück Zylinder aufweisen.

Radial innen bedeutet entlang eines Radius ausgehend von der Rotationsachse in einem inneren Bereich der beiden mittels Schweißens in einem radial inneren Bereich der dazugehörigen Kreisringflächen zu verbindenden Hohlzylinder liegend. Radial außen bedeutet entlang eines Radius ausgehend von der Rotationsachse in einem äußeren Bereich der beiden mittels Schweißens in einem radial äußeren Bereich der dazugehörigen Kreisringflächen zu verbindenden Hohlzylinder liegend. Radial mittig bedeutet entlang eines Radius ausgehend von der Rotationsachse in einem mittleren Bereich der beiden mittels Schweißens in einem radial mittleren Bereich der dazugehörigen Kreisringflächen zu verbindenden Hohlzylinder liegend. Eine rohrförmige Ringnaht verbindet zwei aufeinander positionierte rohrförmige Hohlzylinder.

Eine erste, radial innere rohrförmige Ringnaht kann ebenso als Wurzelschweißung bezeichnet werden.

Verwendet man nach dem Erzeugen der Wurzelschweißung das Metall-Schutzgas-Lichtbogen-Engspalt-Schweißen, kann das Kippen völlig entfallen. Das Metall-Schutzgas-Lichtbogen-Engspalt-Schweißen zeichnet sich dadurch aus, dass es ebenso bei vertikaler Rotorachse und damit bei horizontaler Schweißposition hohe Füllleistungen bei der geforderten Qualität erzeugen kann.

Der Vorteil dieses erfindungsgemäßen Verfahrens liegt darin, dass zum einen die Nebenzeiten durch das Kippen und erneute Einrichten bei horizontaler Rotorachse, das heißt bei einer vertikalen Schweißposition, entfällt und auf diese Weise Fertigungszeit eingespart werden kann. Je nach Verbindungsquerschnitt lässt sich so eine Zeiteinsparung von 25% bis 30% gegenüber der WIG-UP-Kombination bewirken. Ein weiterer Vorteil ergibt sich daraus, dass beim Metall-Schutzgas-Lichtbogen-Engspalt-Schweißen ein Fugenquerschnitt bis zu 40% geringer ist als beim UP-Verfahren.

Dies bewirkt zusätzlich eine Einsparung von SchweißZusatzmaterial in etwa der gleichen Größenordnung.

Vorteilhafte Ausgestaltungen werden in Verbindung mit den Unteransprüchen beansprucht:
Gemäß einer vorteilhaften Ausgestaltung können zuerst die erste, radial innere rohrförmige Ringnaht zwischen zwei Wellenteilstücken und unmittelbar danach die weitere, radial äußere rohrförmige Ringnaht der beiden Wellenteilstücke geschweißt werden. Auf diese Weise kann ein Abschnitt vor einem Auskühlen fertig gestellt werden.

Gemäß einer weiteren vorteilhaften Ausgestaltung kann ein Erzeugen einer weiteren, radial mittleren rohrförmigen Ringnaht zum weiteren Schweißverbinden der beiden Hohlzylinder mittels des Wolfram-Inertgas-Engspalt-Schweißens erfolgen, und zwar nach Erzeugen der ersten, radial inneren rohrförmigen Ringnaht und vor Erzeugen der weiteren, radial äußeren rohrförmigen Ringnaht. Auf diese Weise wird die erste, radial innere rohrförmige Ringnaht durch die weitere, radial mittlere rohrförmige Ringnaht ergänzt und verstärkt.

Gemäß einer weiteren vorteilhaften Ausgestaltung können zuerst die weiteren, radial mittleren rohrförmigen Ringnähte der gesamten Rotorwelle und erst danach alle weiteren, radial äußeren rohrförmigen Ringnähte aller Wellenteilstücke geschweißt werden.

Gemäß einer weiteren vorteilhaften Ausgestaltung können die weiteren, radial mittleren rohrförmigen Ringnähte radial 2 mm bis 20 mm dick sein.

Gemäß einer weiteren vorteilhaften Ausgestaltung kann das Metall-Schutzgas-Lichtbogen-Engspalt-Schweißen ein Metall-Inertgas-Lichtbogen-Engspalt-Schweißen oder ein Metall-Aktivgas-Lichtbogen-Engspalt-Schweißen sein.

Die Erfindung wird anhand von Ausführungsbeispielen in Verbindung mit den Figuren näher beschrieben. Es zeigen:
- Figur 1: ein Ausführungsbeispiel einer erfindungsgemäßen Welle;
- Figur 2: ein Ausführungsbeispiel eines erfindungsgemäßen Verfahrens.

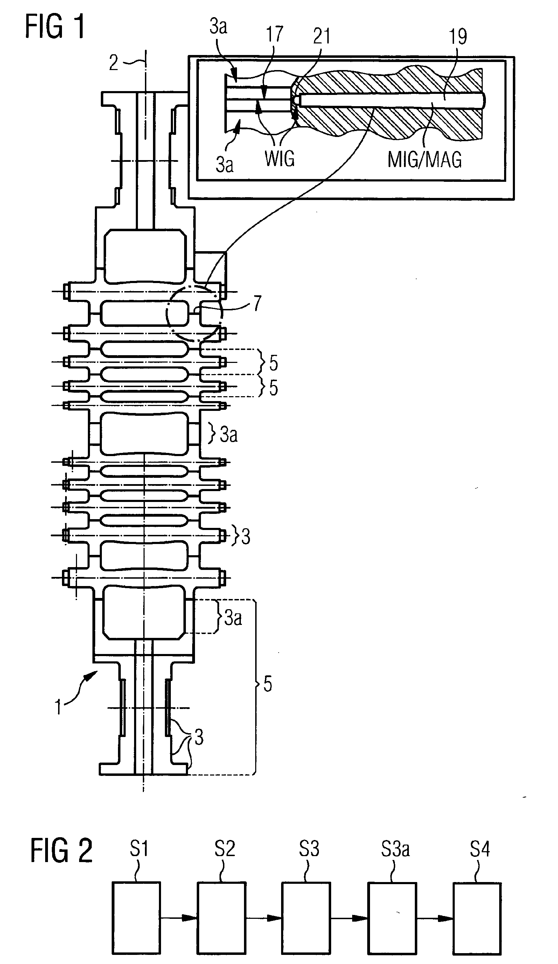

Figur 1 zeigt ein Ausführungsbeispiel einer erfindungsgemäßen Welle 1, die durch ein erfindungsgemäßes Verfahren hergestellt wurde. Grundsätzlich sind alle Wellen oder Achsen gleicher Bauart von der Erfindung umfasst. Eine Rotorwelle wird beispielsweise für eine Turbine und/oder einen Generator verwendet. Die Welle 1 weist Wellenteilstücke 5 auf. Die Wellenteilstücke 5 sind jeweils um eine gemeinsame Rotationsachse 2 rotationssymmetrisch. Im zusammengeschweißten Zustand liegen alle Wellenteilstücke koaxial entlang dieser gemeinsamen Rotationsachse 2. Die Geometrie der Wellenteilstücke 5 ist dadurch bestimmt, dass die Wellenteilstücke 5 mindestens einen entlang der Rotationsachse 2 koaxial positionierten Hohlzylinder 3a aufweisen. Beispielsweise kann ein Wellenteilstück 5 aus einem Teilzylinder 3 und zwei jeweils an diesen angrenzenden Hohlzylindern 3a bestehen. Dazu kann ein Wellenteilstück 5 ebenso symmetrisch zu einer senkrecht zur Rotationsachse 2 positionierten mittleren Fläche sein. Ein aus einem Hohlzylinder 3a bestehendes Wellenteilstück 5 kann eine Grundringfläche und eine Deckringfläche aufweisen. Diese Hauptbegrenzungsringflächen sind eine Grundringfläche und eine Deckringfläche des Wellenteilstücks. Die Grundringfläche kann die Grundringfläche eines Hohlzylinders 3a eines Wellenteilstücks 5 und die Deckringfläche kann die Deckringfläche eines weiteren Hohlzylinders 3a des Wellenteilstücks 5 sein. Zur Schweißverbindung aller Wellenteilstücke 5 werden diese entlang der gemeinsam vertikalen Rotationsachse 2 koaxial aufeinander positioniert. Das heißt, alle Wellenteilstücke 5 weisen die gemeinsame Rotationsachse 2 auf. Diese ist zum Schweißverbinden vertikal ausgerichtet. Jeweils zwei Wellenteilstücke 5 werden entlang der vertikalen Rotationsachse 2 koaxial aufeinander positioniert, wobei jeweils zwei Kreisringflächen 7 aneinander angrenzen und diese sich flächig berühren. In Figur 1 ist der zu verschweißende Bereich zweier Hohlzylinder 3a von einer Kreislinie umfasst. Entsprechend ist in Figur 1 rechts oben der kreisförmig Ausschnitt vergrößert dargestellt. Dabei verbinden gemäß Figur 1 drei rohrförmige Ringnähte zwei Hohlzylinder 3a im Bereich deren Kreisringflächen 7 flächig miteinander. Dazu ist eine erste, radial innere rohrförmige Ringnaht 17 zum Schweißverbinden der beiden Hohlzylinder 3a mittels Wolfram-Inertgas-Lichtbogen-Engspalt-Schweißens erzeugt. Diese innere Ringnaht 17 verbindet einen inneren Bereich der beiden Kreisringflächen 7. Dies ist im vergrößerten Ausschnitt der Figur 1 links dargestellt. Des Weiteren ist eine weitere, radial äußere rohrförmige Ringnaht 19 zum weiteren Schweißverbinden der beiden Hohlzylinder 3a mittels eines Metall-Schutzgas-Lichtbogen-Engspalt-Schweißens erzeugt. Zur Erzeugung dieser weiteren, radial äußeren rohrförmigen Ringnaht 19 kann die Rotationsachse 2 vertikal ausgerichtet verbleiben. Das Metall-Schutzgas-Lichtbogen-Engspalt-Schweißen kann ein Metall-Inertgas-Lichtbogen-Engspalt-Schweißen oder ein Metall-Aktivgas-Lichtbogen-Engspalt-Schweißen sein. Zwischen der ersten, radial inneren rohrförmigen Ringnaht 17 und der weiteren, radial äußeren rohrförmigen Ringnaht 19, die auf der rechten Seite des vergrößerten Ausschnitts dargestellt ist, kann eine weitere, radial mittlere rohrförmige Ringnaht 21 zum weiteren Schweißverbinden der beiden Hohlzylinder 3a im Bereich deren aneinander angrenzenden Kreisringflächen 7 mittels des Wolfram-Inertgas-Engspalt-Schweißens erzeugt sein. Die Welle 1 ist während des gesamten Herstellungsverfahrens mit vertikal orientierter Rotationsachse 2 ausgerichtet. Ein herkömmlicher Weise erforderliches Kippen entfällt. Die Innen- und Außendurchmesser von aneinander angrenzenden Kreisringflächen können gleich sein.

Figur 2 zeigt ein Ausführungsbeispiel eines erfindungsgemäßen Herstellungsverfahrens. Mit einem Schritt S1 erfolgt ein Erzeugen von um eine Rotationsachse 2 symmetrischen, koaxial entlang der Rotationsachse 2 mindestens einen Hohlzylinder 3a und optional mindestens einen Zylinder 3 aufweisenden Wellenteilstücken. Mit einem Schritt S2 erfolgt ein Positionieren jeweils zweier Wellenteilstücke 5 entlang der vertikalen Rotationsachse 2 koaxial aufeinander, wobei jeweils zwei Hohlzylinder 3a mit deren Kreisringflächen 7 aneinander angrenzen. Mit einem Schritt S3 erfolgt ein Erzeugen einer ersten, radial inneren rohrförmigen Ringnaht 17 zum Schweißverbinden der beiden Hohlzylinder 3a in einem radial inneren Bereich der dazugehörigen Kreisringflächen 7 mittels Wolfram-Inertgas-Lichtbogen-Engspalt-Schweißen. Mit einem Schritt S4 erfolgt ein Erzeugen einer weiteren, radial äußeren rohrförmigen Ringnaht 19 zum weiteren Schweißverbinden der Hohlzylinder 3a in einem radial äußeren Bereich der dazugehörigen Kreisringflächen 7 mittels eines Metall-Schutzgas-Lichtbogen-Engspalt-Schweißen, wobei die Rotationsachse 2 vertikal ausgerichtet verbleibt. Gemäß einer besonders vorteilhaften Aufführungsform können zuerst die erste, radial innere rohrförmige Ringnaht 17 zwischen zwei Wellenteilstücken 5 und unmittelbar danach die weitere, radial äußere rohrförmige Ringnaht 19 der beiden Wellenteilstücke 5 geschweißt wird. Erst danach werden die nächsten beiden Wellenteilstücke 5 vollständig miteinander verschweißt. Grundsätzlich können ebenso zuerst alle ersten, radial inneren rohrförmigen Ringnähte 17 der gesamten Welle 1 und danach alle weiteren, radial äußeren rohrförmigen Ringnähte 19 aller Wellenteilstücke 5 geschweißt werden. Mit einem Schritt S3a kann ein Erzeugen einer weiteren, radial mittleren rohrförmigen Ringnaht 21 zum weiteren Schweißverbinden der Hohlzylinder 3a mittels des Wolfram-Inertgas-Engspalt-Schweißens, nach Erzeugen der ersten, radial inneren rohrförmigen Ringnaht 17 und vor Erzeugen der weiteren, radial äußeren rohrförmigen Ringnaht 19 erfolgen.

## Patentansprüche

1. Verfahren zum Verbindungsschweißen einer Welle (1), insbesondere für eine Turbine und/oder einen Generator, mit den Schritten
- Erzeugen von um eine Rotationsachse (2) symmetrischen, koaxial entlang der Rotationsachse (2) mindestens einen Hohlzylinder (3a) aufweisenden Wellenteilstücken (5);
- Positionieren jeweils zweier Wellenteilstücke (5) entlang der vertikalen Rotationsachse (2) koaxial aufeinander, wobei jeweils zwei Hohlzylinder (3a) mit deren Kreisringflächen (7) aneinander angrenzen;
- Erzeugen einer ersten, radial inneren rohrförmigen Ringnaht (17) zum Schweißverbinden der beiden Hohlzylinder (3a) in einem radial inneren Bereich der dazugehörigen Kreisringflächen (7) mittels Wolfram-Inertgas-Lichtbogen-Engspalt-Schweißen;
**gekennzeichnet durch**
- Erzeugen einer weiteren, radial äußeren rohrförmigen Ringnaht (19) zum weiteren Schweißverbinden der Hohlzylinder (3a) in einem radial äußeren Bereich der dazugehörigen Kreisringflächen (7) mittels eines Metall-Schutzgas-Lichtbogen-Engspalt-Schweißen, wobei die Rotationsachse (2) vertikal ausgerichtet verbleibt.

2. Verfahren nach Anspruch 1,
**dadurch gekennzeichnet, dass**
beim Erzeugen lediglich zweier Ringnähte (17, 19) zuerst die erste, radial innere rohrförmige Ringnaht (17) zwischen zwei Wellenteilstücken (5) und unmittelbar danach die weitere, radial äußere rohrförmige Ringnaht (19) der beiden Wellenteilstücke (5) geschweißt wird.

3. Verfahren nach Anspruch 1,
**gekennzeichnet durch**
- Erzeugen einer weiteren, radial mittleren rohrförmigen Ringnaht (21) zum weiteren Schweißverbinden der Hohlzylinder (3a) mittels des Wolfram-Inertgas-Engspalt-Schweißens, nach Erzeugen der ersten, radial inneren rohrförmigen Ringnaht (17) und vor Erzeugen der weiteren, radial äußeren rohrförmigen Ringnaht (19).

4. Verfahren nach Anspruch 3,
**dadurch gekennzeichnet, dass**
zuerst alle weiteren, radial mittleren rohrförmigen Ringnähte (21) der gesamten Rotorwelle (1) und erst danach alle weiteren, radial äußeren rohrförmigen Ringnähte (19) aller Wellenteilstücke (5) geschweißt werden.

5. Verfahren nach Ansprüche 3 oder 4,
**dadurch gekennzeichnet, dass**
die weiteren, radial mittleren rohrförmigen Ringnähte (21) radial 2 bis 20 mm dick sind.

6. Verfahren nach einem der vorangehenden Ansprüche,
**dadurch gekennzeichnet, dass**
das Metall-Schutzgas-Lichtbogen-Engspalt-Schweißen Metall-Inertgas-Lichtbogen-Engspalt-Schweißen oder Metall-Aktivgas-Lichtbogen-Engspalt-Schweißen ist.

## Claims

1. Method for joint welding a shaft (1), particularly for a turbine and/or a generator, having the steps
- creation of shaft parts (5), which are symmetrical about a rotational axis (2) and coaxial along the rotational axis (2), comprising at least one hollow cylinder (3a);
- positioning of in each case two shaft parts (5) coaxially to each other along the vertical rotational axis (2), wherein in each case the annular surfaces (7) of two hollow cylinders (3a) abut each other;
- creation of a first, tubular, inner radial annular seam (17) in order to weld together the two hollow cylinders (3a) in a radial inner region of the associated annular surfaces (7) by means of narrow-gap tungsten inert gas arc welding;
**characterised by**
- creation of a further, tubular, outer radial annular seam (19) in order further to weld together the hollow cylinders (3a) in a outer radial region of the associated annular surfaces (7) by means of narrow-gap metal gas-shielded arc welding, wherein the rotational axis (2) remains vertically aligned.

2. Method according to claim 1,
**characterised in that**
upon creation of only two annular seams (17, 19) initially the first, tubular, inner radial annular seam (17) between two shaft parts (5) is welded and immediately thereafter the further, tubular outer radial annular seam (19) of the two shaft parts (5).

3. Method according to claim 1,
**characterised by**
- the creation of a further, tubular middle radial annular seam (21) in order further to weld together the hollow cylinders (3a) by means of narrow-gap tungsten inert gas welding, after the creation of the first, tubular, inner radial annular seam (17) and before the creation of the further, tubular, outer radial annular seam (19).

4. Method according to claim 3,
**characterised in that**
initially all further, tubular middle radial annular seams (21) of the entire rotor shaft (1) are welded and only thereafter all further, tubular outer radial annular seams (19) of all shaft parts (5).

5. Method according to claims 3 or 4,
**characterised in that**
the further, tubular middle radial annular seams (21) are radially 2 to 20 mm thick.

6. Method according to any one of the preceding claims,
**characterized in that**
the narrow-gap metal gas-shielded arc welding is narrow-gap metal inert gas arc welding or narrow-gap metal active gas arc welding.

## Revendications

1. Procédé d'assemblage par soudage d'un arbre (1), en particulier pour une turbine et/ou un générateur, comprenant les étapes :
- réaliser autour d'un axe de rotation (2) des éléments d'arbre (5) symétriques comprenant coaxialement le long de l'axe de rotation (2) au moins un cylindre creux (3a) ;
- positionner à chaque fois deux éléments d'arbre (5) coaxialement l'un sur l'autre le long de l'axe de rotation verticale (2), deux cylindres creux (3a) étant contigus l'un à l'autre par leur faces (7) en anneau de cercle ;
- réaliser un premier cordon de soudure annulaire (17) radialement intérieur de forme tubulaire pour assembler les deux cylindres creux (3a) dans une région radialement intérieure des faces associées (7) en anneau de cercle, par soudage à l'arc à fente étroite en atmosphère inerte avec électrode de tungstène ;
**caractérisé par** le fait de
- réaliser un autre cordon de soudure annulaire (19) radialement extérieur de forme tubulaire pour assembler les cylindres creux (3a) dans une région radialement extérieure des faces associées (7) en anneau de cercle, par un soudage à l'arc à fente étroite sous protection gazeuse avec métal d'apport, l'axe de rotation (2) restant orienté verticalement.

2. Procédé selon la revendication 1,
**caractérisé en ce que**
lorsque l'on réalise uniquement deux cordons de soudure annulaires (17, 19), on réalise d'abord le premier cordon de soudure annulaire (17) radialement intérieur de forme tubulaire entre deux éléments d'arbre (5) et aussitôt après l'autre cordon de soudure annulaire (19) radialement extérieur de forme tubulaire des deux éléments d'arbre (5).

3. Procédé selon la revendication 1,
**caractérisé par** le fait de
- réaliser un autre cordon de soudure annulaire (21) radialement médian de forme tubulaire pour assembler les cylindres creux (3a) par soudage à fente étroite en atmosphère inerte avec électrode de tungstène, après réalisation du premier cordon de soudure annulaire (17) radialement intérieur de forme tubulaire et avant réalisation de l'autre cordon de soudure annulaire (19) radialement extérieur de forme tubulaire.

4. Procédé selon la revendication 3,
**caractérisé en ce que**
l'on réalise d'abord tous les autres cordons de soudure annulaires (21) radialement médians de forme tubulaire de l'ensemble de l'arbre de rotor (1) et seulement après tous les autres cordons de soudure annulaires (19) radialement extérieurs de forme tubulaire de tous les éléments d'arbre (5).

5. Procédé selon les revendications 3 ou 4,
**caractérisé en ce que**
les autres cordons de soudure annulaires (21) radialement médians de forme tubulaire ont radialement une épaisseur de 2 à 20 mm.

6. Procédé selon l'une des revendications précédentes,
**caractérisé en ce que**
le soudage à l'arc à fente étroite sous protection gazeuse avec métal d'apport est le soudage à l'arc à fente étroite en atmosphère inerte avec métal d'apport ou le soudage à l'arc à fente étroite sous protection de gaz actif avec métal d'apport.
